# FASCICULE DE BREVET EUROPEEN

(11) **EP 0 652 142 B1**
(45) Date de publication et mention de la délivrance du brevet: **15.10.1997**
(21) Numéro de dépôt: 94117253.8
(22) Date de dépôt: 02.11.1994
(51) Int. Cl.: B60S 1/58, B60Q 1/44

(54) **Agencement de la partie arrière d'un véhicule automobile comportant un essuie-glace de la lunette arrière et un feu arrière stop supplémentaire**
Anordnung des Heckteils eines Kraftfahrzeugs mit Heckscheibenwischer und zusätzlicher Bremsleuchte
Arrangement of the rear part of a motor vehicle having a wiper for the rear window and a supplementary brake light

(30) Priorité: 04.11.1993 FR 9313127
(43) Date de publication de la demande: 10.05.1995
(73) Titulaire: VALEO SYSTEMES D'ESSUYAGE, 78180 Montigny-Le-Bretonneux (FR)
(72) Inventeur: Eustache, Jean-Pierre, F-92160 Antony (FR); Schitter, Jack, F-86100 Antran (FR)
(74) Mandataire: Gamonal, Didier

(56) Documents cités:
- DE-A- 3 406 688
- DE-U- 9 107 295
- DE-U- 9 312 682

## Description

La présente invention concerne un agencement de la partie arrière d'un véhicule automobile.

L'invention concerne plus particulièrement un agencement de la partie arrière d'un véhicule automobile du type comportant une lunette ou vitre arrière dont l'essuyage est assuré par un dispositif d'essuie-glace qui comporte un groupe moteur électrique agencé à l'intérieur du véhicule et dont l'arbre de sortie traverse avec son palier, appelé plus communément fût, un trou de passage formé dans la lunette arrière, ou dans une partie de la carosserie encadrant la lunette arrière, avec interposition d'une douille épaulée de montage pour permettre la fixation du groupe moteur par serrage d'un écrou sur une portion filetée du palier support de l'arbre d'entraînement qui s'étend à l'extérieur du véhicule pour recevoir la tête d'entraînement de l'essuie-glace de la lunette arrière.

Une telle conception est particulièrement avantageuse en ce qu'elle permet d'assurer la fixation du dispositif d'essuie-glace par simple serrage, depuis l'extérieur, d'un écrou.

L'agencement de la partie arrière des véhicules automobiles modernes nécessite également, conformément à certaines dispositions légales, de prévoir un feu de signalisation supplémentaire et plus particulièrement un feu arrière de stop supplémentaire aux deux feux stop latéraux agencés dans les blocs de feux arrières du véhicule, qui est agencé à l'intérieur du véhicule en regard d'une partie de la lunette arrière, et notamment sensiblement au-dessus du bord horizontal inférieur de la lunette arrière.

Il est connu, par exemple du document DE-A-3 406 688, d'agencer un tel feu sur un dispositif d'essuie-glace. Cependant, dans le document précité, la fixation du dispositif d'essuie-glace est complexe.

La présente invention a pour but de proposer un agencement tel que décrit dans DE-A- 3 406 688 dont le montage et la fixation puissent être réalisées en une seule opération.

Dans ce but, l'invention propose un tel agencement caractérisé en ce qu'une douille épaulée de montage est interposée entre le dispositif d'essuie-glace et ledit trou de passage pour permettre la fixation du groupe moteur par serrage d'un écrou sur une portion filetée du palier qui s'étend à l'extérieur du véhicule et en ce que le support du feu comporte des moyens d'indexation par rapport au dispositif d'essuie-glace.

Selon divers modes de réalisation de l'invention :
- le support de feu comporte un logement de réception du bloc d'éclairage ;
- le logement présente une direction d'axe sensiblement horizontale ;
- le support de feu comporte des moyens d'indexation par rapport au dispositif d'essuie-glace ;
- le support du bloc d'éclairage est fixé à la douille de montage ;
- le support du bloc d'éclairage comporte un cadre à l'intérieur duquel est monté le bloc d'éclairage et dont une face extérieure est fixée à un bord radial extérieur de l'épaulement de la douille de montage ;
- la douille épaulée de montage et le support du bloc d'éclairage sont réalisés en une seule pièce ;
- l'agencement comporte un boîtier fixé au support du bloc d'éclairage qui renferme le feu arrière
   et le groupe moteur ;
- le groupe moteur du dispositif d'essuie-glace et le feu arrière sont reliés electriquement à un connecteur commun pour permettre leur raccordement simultané du circuit électrique du véhicule.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective de la partie arrière d'un véhicule agencée conformément aux enseignements de l'invention ;
- la figure 2 est une vue à plus grande échelle en section par un plan vertical médian passant par l'axe de l'arbre d'entraînement de l'essuie-glace et qui illustre un premier mode de réalisation de l'agencement selon l'invention du feu arrière et du dispositif d'essuie-glace
- la figure 3 est une vue en élévation selon la flèche F de la figure 2 avec un arraché local montrant une des caractéristiques de l'invention.

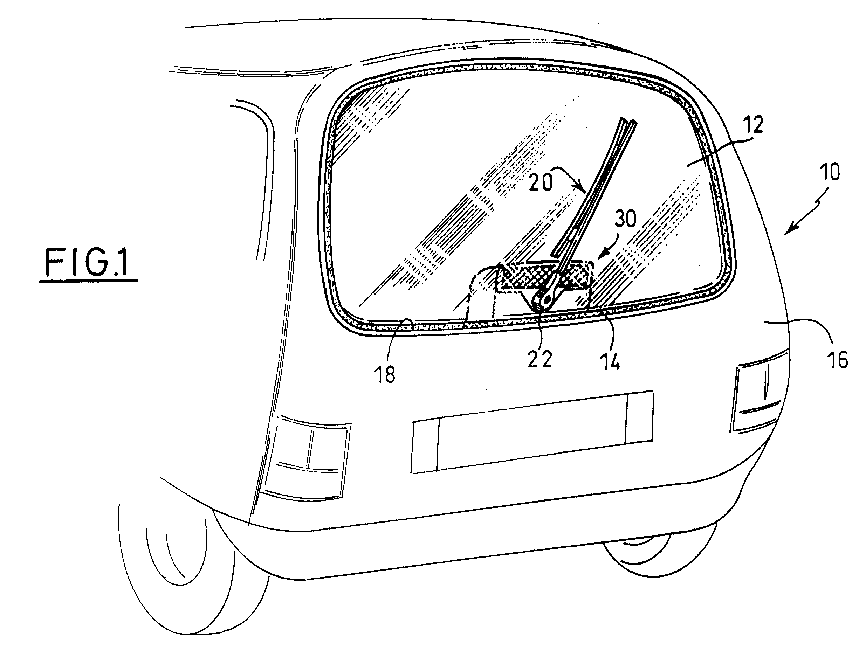

On a représenté sur la figure 1 la partie arrière 10 d'un véhicule automobile sur laquelle on reconnaît une lunette ou vitre arrière 12 qui est montée dans une ouverture 14 de la carosserie 16 avec interposition d'un joint d'étanchéité 18.

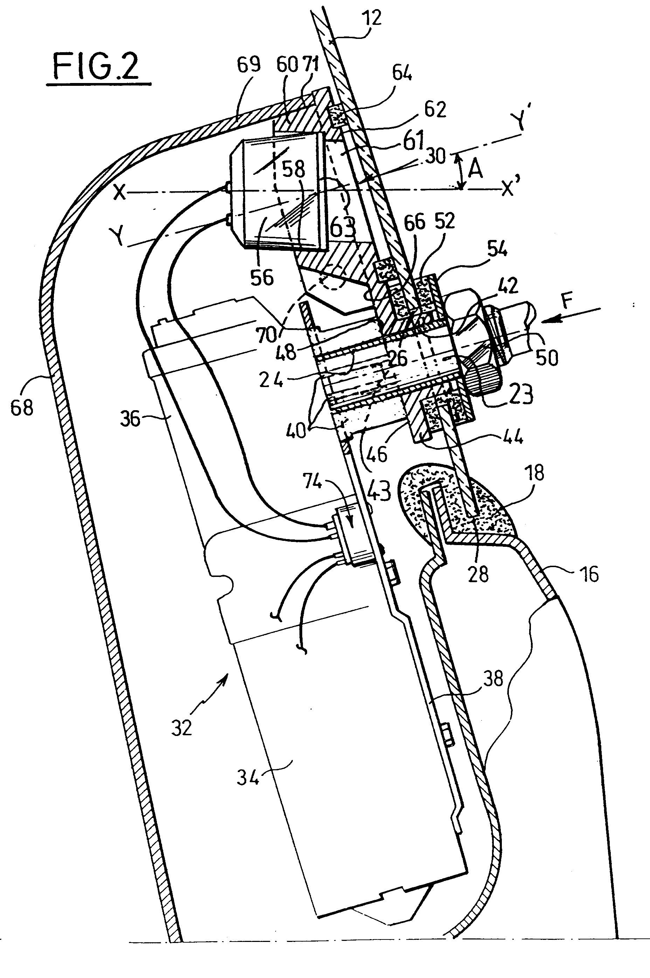

La partie arrière du véhicule 10 est équipée d'un essuie-glace 20 pour l'essuyage de la lunette arrière 12 dont la tête d'entraînement 22 est portée par un arbre d'entraînement 23 supporté par un palier 24 ou fût (voir figure 2) qui traverse un trou de passage 26 formé dans la lunette arrière 12 au voisinage du bord longitudinal inférieur 28 de cette dernière.

On voit également sur la figure 1 un feu de signalisation arrière, ici un feu de stop 30 qui est agencé à l'intérieur du véhicule et qui est visible à travers la lunette arrière 12.

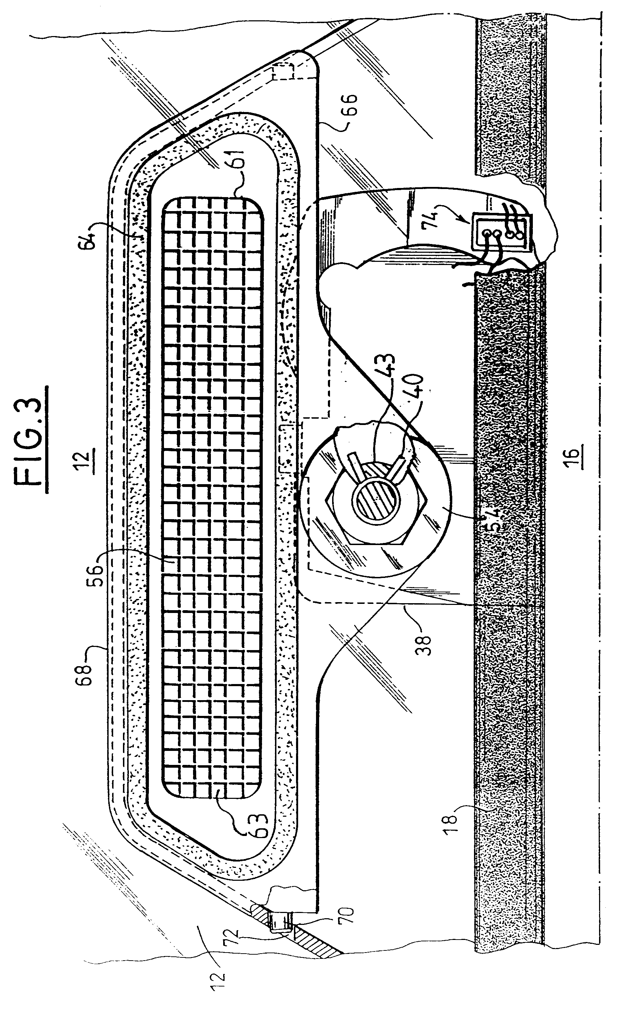

Le feu arrière de stop 30 est agencé au voisinage du bord longitudinal inférieur 28 de la vitre arrière 12, de façon à ne pas affecter la visibilité du conducteur à travers la lunette arrière 12 et est fixé conformément aux enseignements de l'invention de la manière qui sera maintenant décrite en détail en référence aux figures 2 et 3.

L'arbre d'entraînement 23 et son palier 24 appartiennent à un groupe moteur d'entraînement électrique de l'essuie-glace 32 qui comporte pour l'essentiel un moteur électrique 34 et un réducteur 36 qui sont portés par une platine de montage 38 réalisée sous la forme d'une plaque en tôle fixée sur une partie constitutive du véhicule automobile.

Le fût 24 est équipé extérieurement de nervures longitudinales 40 réparties circonférentiellement en s'étendant sur une partie de la hauteur dudit fût de manière à créer une base d'appui 48 située à distance de l'extrémité libre du fût.

La fixation du groupe 32 à la partie arrière du véhicule est assurée par l'intermédiaire d'une douille de montage 42 munie d'un épaulement radial extérieur 44. La face annulaire d'extrémité 46 de l'épaulement radial 44 est en appui axial contre la base 48 formée par les nervures 40 contre laquelle elle est serrée par l'intermédiaire d'un écrou de serrage 50 qui prend appui axialement sur une garniture d'étanchéité 52 interposée entre le bord cylindrique annulaire de la douille de montage 42 et le trou de passage 26, avec interposition d'une rondelle 54.

Le serrage de l'écrou 50 provoque le serrage axial de la douille épaulée 42 contre la base 48 des nervures 40 ainsi que la compression de la garniture d'étanchéité 52 qui assure l'immobilisation axiale et en rotation de l'entretoise constituée par la douille de montage 42 par rapport à la lunette arrière 12.

Conformément aux enseignements de l'invention, le feu arrière 30 est porté par le dispositif d'essuie-glace.

Dans le mode de réalisation illustré sur la figure 2, le feu arrière 30 est fixé sur la douille de montage 42.

A cet effet, le feu arrière de stop 30 est constitué par un bloc d'éclairage 56 d'axe X-X' qui est reçu et emboîté dans un logement de forme générale rectangulaire 58 formé à l'intérieur d'un support du bloc d'éclairage 60 en forme de cadre rectangulaire de manière à ce que ce feu 30 soit sensiblement horizontal permettant ainsi au flux lumineux d'être également sensiblement horizontal. Pour cela le logement 58 présente une inclinaison A, inclinaison correspondante à un angle formé par l'axe X-X' et un axe Y-Y' sensiblement perpendiculaire à la direction de la vitre 12.

De plus, le logement 58 se poursuit en direction de la vitre 12 par un évidement rectangulaire 61 coaxial avec le logement 58 et de dimension telle qu'il corresponde aux dimensions du voyant 63 qui porte le feu 30, ce voyant pouvant être avec ou sans optique.

La face avant 62 du support 60 du bloc d'éclairage 56 est en appui contre la face intérieure de la lunette arrière 12 avec interposition d'un joint en mousse 64.

Grâce à ce support le feu de stop 30 est positionné en position horizontale par le logement 58 et permet de rattraper l'inclinaison de la vitre 12 grâce à l'espace occupé par l'évidement 61 et subsistant entre le voyant 63 du feu 30 et la vitre 12.

La face inférieure 66 du support 60 se prolonge verticalement vers le bas et est réalisée venue de matière en une seule pièce avec l'épaulement 44 de la douille 42 comme on peut le voir à la figure 3.

Le support 60 présente en plus des moyens d'indexations angulaires par rapport au dispositif d'essuie-glace. Plus particulièrement, l'épaulement 44 de la douille 42 présente une saillie 43 de direction opposée à la direction de la douille 42 et qui vient se loger entre deux nervures 40 consécutives de manière à immobiliser en rotation le support 60 par rapport au fût 24, la saillie étant de dimension telle qu'elle soit sensiblement égale à la distance entre deux nervures consécutives.

Ainsi, la fixation du groupe moteur 32 et du feu 30 de même que le positionnement dudit feu sont assurés simultanément lors du montage et de la fixation de la bague de montage 42.

L'ensemble constitué par le feu 30 et le dispositif d'essuie-glace 32 est masqué par un boîtier ou capot 68 dont le bord supérieur 69 épouse la forme de la face supérieure 71 du cadre formant support 60.

Le boîtier ou capot 68 est fixé sur le support 60 par l'intermédiaire de deux logements semi-ouverts 72 qui sont emboîtés élastiquement sur deux axes 70 portés par le support 60 et agencés au voisinage de ses extrémités longitudinales opposées comme on peut le voir sur la figure 3.

Comme on peut le voir également sur la figure 3, l'ensemble constitué par le groupe 32 et le feu 30 comporte également un connecteur électrique 74 qui est porté par la platine 38 et qui est relié électriquement au feu 30 et au groupe moteur électrique 32 pour permettre leur raccordement simultané, en une seule opération d'emboîtement de connecteurs électriques complémentaires, au circuit électrique du véhicule.

## Revendications

1. Agencement de la partie arrière d'un véhicule automobile (10) du type comportant une lunette arrière (12) dont l'essuyage est assuré par un dispositif d'essuie-glace qui comporte un groupe moteur électrique (32) agencé à l'intérieur du véhicule et dont l'arbre de sortie (23) et le palier (24) traversent un trou de passage (26) formé dans la lunette arrière (12), ou dans une partie de la carrosserie (16) encadrant la lunette arrière (12), du type comportant un feu de signalisation arrière (30), notamment un feu de stop, agencé à l'intérieur du véhicule en regard d'une partie de la lunette arrière (12) et qui comporte un bloc d'éclairage (56) porté par un support de feu (60), et du type dans lequel le support de feu (60) est porté par le dispositif d'essuie-glace, caractérisé en ce qu'une douille épaulée de montage (42, 44) est interposée entre le dispositif d'essuie-glace et ledit trou de passage (26) pour permettre la fixation du groupe moteur (32) par serrage d'un écrou (50) sur une portion filetée du palier (24) qui s'étend à l'extérieur du véhicule et en ce que le support de feu (60) comporte des moyens d'indexation (43) par rapport au dispositif d'essuie-glace.

2. Agencement selon la revendication 1, caractérisé en ce que le support de feu (60) comporte un logement (58) de réception du bloc d'éclairage (56).

3. Agencement selon la revendication 2, caractérisé en ce que le logement (58) présente une direction d'axe (X-X') sensiblement horizontale.

4. Agencement selon l'une des revendications 1 à 3, caractérisé en ce que le support (60) du bloc d'éclairage (56) est fixé à la douille épaulée de montage (42, 44).

5. Agencement selon la revendication 4, caractérisé en ce que le support (60) du bloc d'éclairage (56) comporte un cadre à l'intérieur duquel est monté le bloc d'éclairage (56) et dont une face extérieure (66) est fixée à un bord radial extérieur de l'épaulement (44) de la douille de montage (42).

6. Agencement selon la revendication 5, caractérisé en ce que la douille épaulée de montage (42, 44) et le support (60) du bloc d'éclairage sont réalisés en une seule pièce.

7. Agencement selon l'une quelconque des revendications 1 à 6, caractérisé en ce qu'il comporte un boîtier (68) fixé au support (60) du bloc d'éclairage (56) qui renferme le feu arrière (30) et le groupe moteur (32) du dispositif d'essuie-glace.

8. Agencement selon l'une quelconque des revendications précédentes, caractérisé en ce que le groupe moteur (32) du dispositif d'essuie-glace et le feu arrière (30) sont reliés electriquement à un connecteur commun (74) pour leur raccordement simultané au circuit électrique du véhicule.

9. Agencement selon l'une quelconque des revendications précédentes, caractérisé en ce que le support (60) est en appui contre la face intérieure de la lunette (12) avec interposition d'un joint (64).

## Claims

1. An arrangement of the rear part of a motor vehicle (10), of the type having a rear window (12) which is arranged to be wiped by a screen wiping apparatus which comprises an electrical drive motor unit (32) arranged inside the vehicle, and of which the output spindle (23) and the bearing (24) extend through a through hole (26) formed in the rear window (12), or in a part of the bodywork (16) surrounding the rear window (12), of the type including a rear warning light (30), in particular a stop light, which is arranged inside the vehicle facing towards a portion of the rear window (12) and which comprises a lighting unit (56) carried by a lighting unit support (60), and of the type in which the lighting unit support (60) is carried by the screen wiper apparatus, characterised in that a shouldered mounting bush (42, 44) is interposed between the screen wiper apparatus and the said through hole (26), to enable the drive motor unit (32) to be fastened by tightening a nut (50) on a threaded portion of the bearing (24) which extends outside the vehicle, and in that the lighting unit support (60) includes means (43) for indexing it with respect to the screen wiper apparatus.

2. An arrangement according to Claim 1, characterised in that the lighting unit support (60) includes a housing (58) for receiving the lighting unit (56).

3. An arrangement according to Claim 2, characterised in that the housing (58) defines an axis (X-X') in a substantially horizontal direction.

4. An arrangement according to one of Claims 1 to 3, characterised in that the support (60) for the lighting unit (56) is fixed to the shouldered mounting bush (42, 44).

5. An arrangement according to Claim 4, characterised in that the support (60) for the lighting unit (56) comprises a frame, within which the lighting unit (56) is mounted, and which has an external face (66) fixed to an external radial edge of the shoulder (44) of the mounting bush (42).

6. An arrangement according to Claim 5, characterised in that the shouldered mounting bush (42, 44) and the support (60) for the lighting unit are made in one piece.

7. An arrangement according to any one of Claims 1 to 6, characterised in that it includes a casing (68) fixed to the support (60) for the lighting unit (56), which closes off the rear light (30) and the drive motor unit (32) of the screen wiping apparatus.

8. An arrangement according to any one of the preceding Claims, characterised in that the drive motor unit (32) of the screen wiper apparatus and the rear light (30) are connected electrically to a common connector (74) for their simultaneous connection to the electrical circuit of the vehicle.

9. An arrangement according to any one of the preceding Claims, characterised in that the support (60) is abutted against the internal surface of the window (12), with a pad (64) being interposed.

## Patentansprüche

1. Anordnung des Heckteils eines Kraftfahrzeugs (10) in der Ausführung mit einer Heckscheibe (12), die durch einen Scheibenwischer gewischt wird, der eine elektrische Antriebseinheit (32) umfaßt, die im Innern des Fahrzeugs angeordnet ist und deren Ausgangswelle (23) und Lager (24) durch ein Durchgangsloch (26) hindurchgehen, das in die Heckscheibe (12) oder in einen Teil der Karosserie (16), der die Heckscheibe (12) umgibt, eingearbeitet ist, und in der Ausführung mit einer Hecksignalleuchte (30), insbesondere einer Bremsleuchte, die im Innern des Fahrzeugs gegenüber einem Teil der Heckscheibe (12) angeordnet ist und die eine an einer Leuchtenhalterung (60) angebrachte Beleuchtungseinheit (56) umfaßt, wobei die Leuchtenhalterung (60) am Scheibenwischer angebracht ist , **dadurch gekennzeichnet,** daß eine abgesetzte Montagehülse (42, 44) zwischen dem Scheibenwischer und dem besagten Durchgangsloch (26) eingefügt ist, um die Befestigung der Antriebseinheit (32) durch Anziehen einer Mutter (50) auf einem Gewindeteilstück des Lagers (24) zu ermöglichen, das sich außerhalb des Fahrzeugs erstreckt, und daß die Leuchtenhalterung (60) Mittel (43) zur Vorpositionierung im Verhältnis zum Scheibenwischer umfaßt.

2. Anordnung nach Anspruch 1 , **dadurch gekennzeichnet,** daß die Leuchtenhalterung (60) eine Aufnahme (58) für das Einsetzen der Beleuchtungseinheit (56) umfaßt.

3. Anordnung nach Anspruch 2 , **dadurch gekennzeichnet,** daß die Aufnahme (58) eine Achse mit in etwa horizontaler Richtung (X-X') aufweist.

4. Anordnung nach einem der Ansprüche 1 bis 3, **dadurch gekennzeichnet,** daß die Halterung (60) der Beleuchtungseinheit (56) an der Montagehülse (42, 44) befestigt ist.

5. Anordnung nach Anspruch 4 **, dadurch gekennzeichnet,** daß die Halterung (60) der Beleuchtungseinheit (56) einen Rahmen umfaßt, in dessen Innern die Beleuchtungseinheit (56) eingebaut ist und von dem eine Außenfläche (66) an einer radialen Außenkante der Schulter (44) der Montagehülse (42) befestigt ist.

6. Anordnung nach Anspruch 5 , **dadurch gekennzeichnet,** daß die abgesetzte Montagehülse (42, 44) und die Halterung (60) der Beleuchtungseinheit einstückig ausgeführt sind.

7. Anordnung nach einem der Ansprüche 1 bis 6, **dadurch gekennzeichnet,** daß sie ein an der Halterung (60) der Beleuchtungseinheit (56) befestigtes Gehäuse (68) umfaßt, das die Heckleuchte (30) und die Antriebseinheit (32) des Scheibenwischers umschließt.

8. Anordnung nach einem der vorangehenden Ansprüche, **dadurch gekennzeichnet,** daß die Antriebseinheit (32) des Scheibenwischers und die Heckleuchte (30) elektrisch mit einem gemeinsamen Verbinder (74) verbunden sind, um ihren gleichzeitigen Anschluß an den elektrischen Stromkreis des Fahrzeugs zu ermöglichen.

9. Anordnung nach einem der vorangehenden Ansprüche, **dadurch gekennzeichnet,** daß die Halterung (60) unter Einfügung einer Dichtung (64) an der Innenseite der Heckscheibe (12) anliegt.
